# EUROPEAN PATENT APPLICATION

(11) **EP 2 518 333 A1**
(43) Date of publication of application: **31.10.2012**
(21) Application number: 11786076.7
(22) Date of filing: 24.05.2011
(51) Int. Cl.: F16B 2/20, F16B 2/22, F16L 3/10

(54) **FIXING CLAMP**

(30) Priority: 27.05.2010 CN 201020207345 U
(71) Applicant: ZTE Corporation, Shenzhen, Guangdong 518057 (CN)
(72) Inventor: SHENG, Luning, Guangdong 518057 (CN)
(74) Representative: Anderson, Angela Mary
(86) International application number: PCT/CN2011/074567
(87) International publication number: WO 2011/147304

(57) **Abstract**

A fixing clamp comprises: a metal core (1) which is configured with a fixing section (11) for fixing a to-be-fixed object (4); an elastic surface (2) with corrosion resistance, and this elastic surface (2) wrapping an external of the metal core (1); mounting holes (3), which are configured on at least one end of the metal core (1) and the elastic surface (2). By adopting the metal core (1) and the elastic surface layer (2), the surface of the fixing clamp can achieve the function of long-term corrosion resistance in the condition that the strength of the fixing clamp is ensured; furthermore, the elastic surface layer (2) wraps outside the metal core (1) and is arranged and positioned via the mounting holes (3). The fixing clamp has advantages such as simple structure, convenient realization and low manufacturing cost.

## Description

### Technical Field

The present utility model relates to a fixing clamp.

### Background of the Related Art

At present, the outdoor fixing clamp is usually made by the steel plate surface coating technology or is directly made of the stainless steel plate, plastic and other materials. The outer surface of the fixing clamp made of the steel plate should be wrapped with a non-metallic tube in order to protect the to-be-fixed object from being scratched, and especially, items such as cables should be well protected. In the outdoor environment, the metal surface temperature is rather high when the metal clamp is in the sunlight. If the fixing clamp is made of the ordinary steel plate, its surface should be processed with the surface anti-corrosion treatment and then the non-metallic tube is put on, and there is water accumulated between the clamp and the non-metallic tube after the rain, when such a clamp is placed in a high humid environment, which accelerates the rust of the clamp. When the fixing clamp is made of the stainless steel, it will also corrode as the time passes in a high humid environment. If the fixing clamp is made of the plastic materials, the plastic is very easy to age in the shine of the sun and flush of the rain, and it needs to be replaced regularly, which increases the costs. In addition, the clamp in the humid indoor environment or an environment that is easy to contact with water also has the aforementioned problem.

### Summary of the Utility model

The technical problem to be solved in the present utility model is to provide a fixing clamp whose surface is corrosion resistant and structure is simple, moreover, the clamp can be used for a long term.

In order to solve the aforementioned problem, the present utility model provides a fixing clamp, comprising:
a metal core, which is configured with a fixing section for fixing a to-be-fixed object;
an elastic surface with corrosion resistance, and this elastic surface wrapping an external of the metal core;
mounting holes, which are configured on at least one end of the metal core and the elastic surface.

Preferably the metal core is made of ordinary steel.

Preferably, the elastic surface is made of rubber.

Preferably, the elastic surface is fixed to the metal core by adhesion.

The present utility model has the following advantages:
1, the present utility model uses the metal core and the elastic surface, thus its surface has the function of long-term corrosion resistance in the condition that the strength of the present utility model is ensured, moreover, the elastic surface of the present utility model wraps the external of the metal core and is installed and positioned through the mounting holes, its structure is simple, implementation is easy, and manufacturing cost is low;
2, the metal core in the present utility model uses the ordinary steel, and the elastic surface uses the rubber, both the ordinary steel and the rubber are common materials, they are easy to purchase and have low costs, making the overall manufacturing of the present utility model easier and its cost lower;
3, the elastic surface and the metal core in the present utility model are connected by adhesion, which makes the elastic surface wrapping the surface of the metal core smoother and beautiful, moreover, when the present utility model is bended or deformed, the integrity of the metal core and the elastic surface is better.

### Brief Description of Drawings

In the following, the implementation of the present utility model will be further described with combination of the accompanying drawings:
FIG. 1 shows a diagram of a section structure of the fixing clamp provided in an embodiment of the present utility model;
FIG. 2 shows a top view of the schematic diagram in FIG. 1;
FIG. 3 is a schematic diagram of an installation structure of a fixing clamp provided in an embodiment of the present utility model;
FIG. 4 is a schematic diagram of a second example of the fixing clamp provided in an embodiment of the present utility model;
FIG. 5 is a schematic diagram of a third example of the fixing clamp provided in an embodiment of the present utility model.

### Preferred Embodiments of the Present Utility Model

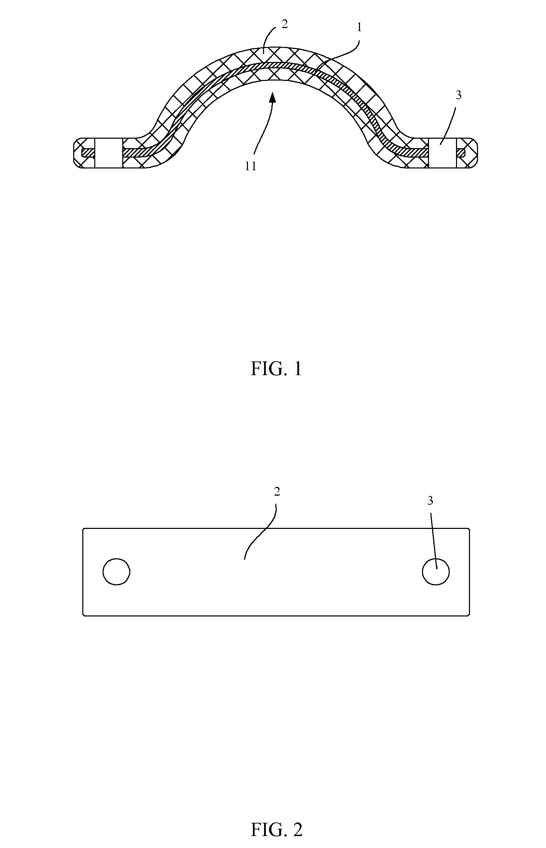

As shown in the FIG. 1 and the FIG. 2, the present utility model comprises the metal core 1, the elastic surface 2 and the mounting holes 3 set on the metal core 1 and the elastic surface 2.

Among them, the metal core 1 is the main body of the present utility model, and is used to support and fix the to-be-fixed object 4. The metal core 1 is configured with the fixing section 11 whose shape matches with the shape of the to-be-fixed object 4 to install and fix the to-be-fixed object 4. The thickness of the metal core 1 is determined according to the structure and pressure of the to-be-fixed object 4.

The elastic surface 2 wraps the external of the metal core, and encloses the metal core within the elastic surface 4, and its external is against and suppresses the to-be-fixed object 4. Since the elastic surface 2 completely encloses the metal core 1, the humidity of the metal core is greatly reduced.

In addition, the elastic surface 2 has certain elasticity, when it is against the to-be-fixed object 4, it can avoid the to-be-fixed object 4 from being scratched. The elastic surface 2 is made of anti-corrosion materials to avoid the elastic surface 2 itself from being deteriorated for corrosion or aging. The elastic surface 2 can also improve the friction between the present utility model and the to-be-fixed object 4, which benefits the fixing of the to-be-fixed object 4.

The mounting holes 3 are through-holes, and they are set on at least one end of the metal core 1 and the elastic surface 2. The utility model can be installed with screws, and the diameter of the mounting holes 3 matches with the diameter of the mounting bolts 5. Using the bolts to install is simple, reliable and easy to operate.

The present utility model uses the metal core 1 and the elastic surface 2, thus its surface has the function of long-term corrosion resistance in the condition that the strength of the present utility model is ensured, moreover, the elastic surface of the present utility model wraps outside the metal core 1, and it is installed and positioned with the mounting holes 3, thus its structure is simple, implementation is easy, and manufacturing cost is low.

In addition, because the metal core 1 is wrapped completely within the elastic surface 2, the humidity of the metal core 1 has been greatly reduced; the metal core 1 might be made of the ordinary steel rather than the stainless steel, moreover, the steel might be surface treated.

In addition, since the rubber material has high friction coefficient, it is not easy to age, but it is easy to be deformed and processed, the elastic surface might be made of the rubber.

In the present utility model, the metal core 1 uses the ordinary steel, the elastic surface uses the rubber, since both the ordinary steel and the rubber are common materials and their purchase is easy and cost is low, the overall manufacturing of the present utility model is easier and its cost is lower.

In addition, the state between the metal core 1 and the elastic surface 2 can be free, and the metal core 1 and the elastic surface 2 will be tightly connected by the pressure for fixing the to-be-fixed object 4. Moreover, glue can be placed between the metal core 1 and the elastic surface 2 so that the metal core 1 and the elastic surface 2 are tightly connected.

In addition, when the elastic surface 2 and the metal core 1 are connected by adhesion, this will make the elastic surface 2 wrapping on the surface of the metal core 1 smoother and beautiful, moreover, when bending and deforming the present utility model, the integrity between the metal core and the elastic surface is better.

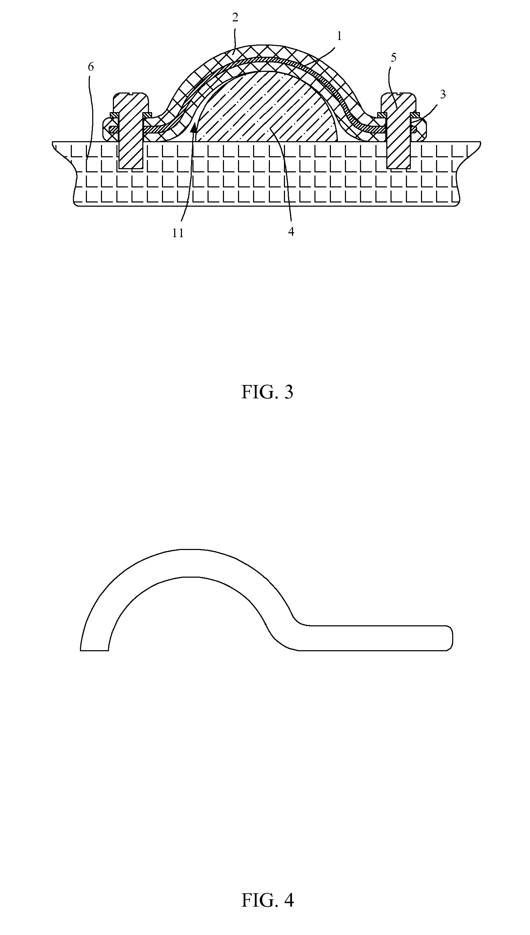

The structure of the present utility model during the installation is shown in as shown in FIG. 3, the to-be-fixed object 4 is seized in the fixing section 11 of the present utility model, after the to-be-fixed object 4 is positioned and against tightly, the mounting bolts 5 are screwed into the wall 6 through the mounting holes 3, and the mounting bolts 5 are tightened, making this utility model fixed on the wall 6, meanwhile the to-be-fixed object 4 is fixed to the wall 6.

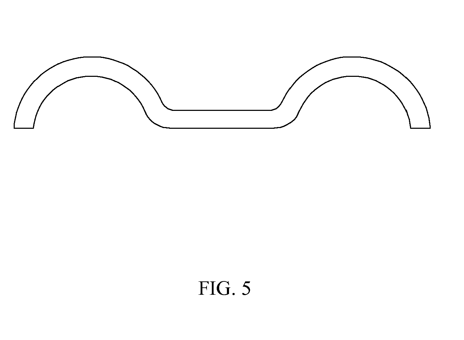

The structure of this utility model might use various forms according to the actual fixing needs of the to-be-fixed object 4, and it might use shapes such as the semi-circular arc, the double arc, circle, U-shaped, polygon, and so on. The FIG. 4 and the FIG. 5 show the structures of two different embodiments of the present utility model.

The fixing clamp provided in the present utility model can be implemented outdoors, or in damp indoor environments or any environment that is easy to contact with water.

In summary, the above description is only the preferred embodiments of the present utility model is not intended to limit the protection scope of the present utility model, therefore, any changes, equivalent replacements and improvements and so on made within the spirit and principles of the present utility model should be included in the protection scope of the present utility model.

### Industrial Applicability

The present utility model provides a fixing clamp, whose surface has the function of corrosion resistance, which can be used for a long time, and of which the structure is simple. Since the metal core is made of the ordinary steel, and the elastic surface is made of the rubber, both the ordinary steel and the rubber are common materials, they are easy to purchase and have low costs, making the overall manufacturing of the present utility model easier and its cost lower. The elastic surface and the metal core are connected by adhesion, which makes the elastic surface wrapping the surface of the metal core smoother and beautiful, moreover, when the present utility model is bended or deformed, the integrity of the metal core and the elastic surface is better.

## Claims

1. A fixing clamp, comprising:
a metal core (1), which is configured with a fixing section (11) for fixing a to-be-fixed object (4);
an elastic surface (2) with corrosion resistance, and this elastic surface (2) wrapping an external of the metal core (1);
mounting holes (3), which are configured on at least one end of the metal core (1) and the elastic surface (2).

2. The fixing clamp of claim 1, wherein: the metal core (1) is made of ordinary steel.

3. The fixing clamp of claim 1, wherein: the elastic surface (2) is made of rubber.

4. The fixing clamp of any one of claims 1~3, wherein: the elastic surface (2) is fixed on the metal core (1) by adhesion.

5. The fixing clamp of any one of claims 1~4, wherein: the fixing clamp is used outdoors or in humid indoor environments.
